# EUROPÄISCHE PATENTSCHRIFT

(11) **EP 0 342 412 B1**
(45) Veröffentlichungstag und Bekanntmachung des Hinweises auf die Patenterteilung: **24.03.1993**
(21) Anmeldenummer: 89107726.5
(22) Anmeldetag: 28.04.1989
(51) Int. Cl.: B60R 1/06

(54) **Motorisch verstellbarer Rückspiegel**
Motorically adjustable rear view mirror
Rétroviseur à réglage motorisé

(30) Priorität: 20.05.1988 DE 3817288
(43) Veröffentlichungstag der Anmeldung: 23.11.1989
(73) Patentinhaber: MEKRA Rangau Plastics GmbH & Co KG, D-90765 Fürth (DE)
(72) Erfinder: Lang, Heinrich, D-8531 Ergersheim (DE); Seiboth, Wolfgang, D-8532 Bad Windsheim (DE)
(74) Vertreter: Rau, Manfred, Dr. Dipl.-Ing.

(56) Entgegenhaltungen:
- EP-A- 0 017 750
- DE-U- 8 531 670
- US-A- 3 575 496
- US-A- 4 050 776
- PATENT ABSTRACTS OF JAPAN, Band 11, Nr. 385 (M-651)[2832], 16. Dezember 1987; & JP-A-62 152 942 (DAITO PRESS KOGYO K.K.) 07-07-1987
- PATENT ABSTRACTS OF JAPAN, Band 12, Nr. 14 (M-659)[2861], 16. Januar 1988; & JP-A-62 173 348 (DAITO PRESS KOGYO K.K.) 30-07-1987

## Beschreibung

Die Erfindung betrifft einen motorisch verstellbaren Rückspiegel für Kraftfahrzeuge, insbesondere Lastkraftwagen, nach dem Oberbegriff des Patentanspruches 1.

Bei einem aus der DE-B-28 22 681 (entsprechend FR-A-24 26 590 und SE-A-79 04 338) bekannten Rückspiegel sind an einer fest mit der Befestigungseinrichtung verbundenen Grundplatte Stellantriebe angebracht. Das Stellglied des einen Stellantriebes greift unmittelbar am Gehäuse an und verschwenkt das Gehäuse um eine Querachse eines Kreuzgelenks, das zwischen dem Gehäuse und der Grundplatte angeordnet ist. Der andere Stellantrieb greift am Kreuzgelenk an und verschwenkt so das Gehäuse um seine Längsachse. Dieser bekannte Spiegel ist konstruktiv umständlich aufgebaut, so daß die Montage sehr aufwendig ist. Weiterhin ist die Einbautiefe der Stellmotor-Anordnung verhältnismäßig groß, so daß das Gehäuse wiederum so tief wird, daß das Blickfeld des Fahrers in Richtung schräg nach vorn erheblich eingeschränkt wird, was sich bei Rangiermanövern, bei welchen es auf eine sehr exakte Platzausnutzung ankommt, als nachteilig erweist.

Aus der EP-A-0 090 909 ist es zur Lösung des letztgenannten Problems für motorisch verstellbare Rückspiegel bereits bekannt, die Stellmotor-Anordnung unmittelbar mit der Befestigungseinrichtung zu verbinden. Diese bekannte Ausgestaltung führt aber nicht zu einer ausreichend stabilen Verbindung zwischen Gehäuse und Befestigungseinrichtung, soweit es sich um besonders große Rückspiegel handelt.

Aus der JP-A-62 152 942 ist ein motorisch verstellbarer Rückspiegel für Kraftfahrzeuge mit den im Oberbegriff des Patentanspruches 1 angegebenen Merkmalen bekannt. Dabei ist das Schubkurbelgetriebe zwischen den ortsfest am Gehäuse befestigten Stellantrieben und der relativ zur Befestigungseinrichtung des Rückspiegels ortsfest angeordneten Grundelement mit einer Kurbel versehen, die mit dem Grundelement über ein Schiebelager gekoppelt ist. Das Schiebelager ist durch einen Stift an der Kurbel der Stellantriebe gebildet, der in eine Langlochführung eines gesonderten, drehbar im Grundelement gelagerten Führungsteil eingreift.

Nachteilig bei dieser Konstruktion ist, daß das Schubkurbelgetriebe relativ platzaufwendig gestaltet, aufgrund der notwendigen Drehlagerung des Führungsteils nur aufwendig montierbar und aufgrund der Langlochführung in sich recht instabil ist.

Der Erfindung liegt die Aufgabe zugrunde, einen Rückspiegel der gattungsgemäßen Art so auszugestalten, daß er einen möglichst einfachen Aufbau, eine einfache Montierbarkeit und eine flache sehr stabile Ausgestaltung aufweist.

Diese Aufgabe wird durch die im kennzeichnungsteil des Anspruches 1 angegebenen Merkmale gelöst. Die erfindungsgemäße Ausgestaltung erlaubt eine außerordentlich flache Bauweise. Durch das erfindungsgemäß ausgestaltete Schubkurbelgetriebe werden die zum Verschwenken des Gehäuses mit der Spiegelglasscheibe relativ zur Befestigungseinrichtung erforderlichen Kräfte quer zur Längsrichtung der Schubkurbelgetriebe auf die Grundplatte übertragen, indem an der Kurbel eine Schubstange mittels eines Kurbelgelenks angelenkt ist, die in einer mit der Grundplatte verbundenen Lagerhülse verschiebbar geführt ist.

Wenn gemäß einer weiteren vorteilhaften Ausgestaltung vorgesehen ist, daß das Schubkurbelgetriebe in sich um eine Längsachse des Schiebelagers schwenkbar ist, dann ist sichergestellt, daß einerseits Einbauungenauigkeiten der Stellantriebe und der Schubkurbelgetriebe ohne Bedeutung sind. Weiterhin ist hierdurch sichergestellt, daß bei Einsatz von zwei Stellantrieben jedes Schubkurbelgetriebe die vom jeweils anderen Stellantrieb erzeugten Schwenkbewegungen aufnehmen kann.

Es ist von ganz besonderem Vorteil, wenn das Gehäuse um ein mit der Befestigungseinrichtung verbundenes Universal-Gelenk um einen Mittelpunkt schwenkbar ist. Diese Ausgestaltung erlaubt eine weitere vorteilhafte Weiterbildung, wonach die jedem Stellantrieb zugeordnete Schwenkachse durch den Mittelpunkt des Universal-Gelenks verläuft. Hierdurch ist sichergestellt, daß eine extrem flache Bauweise erreicht wird. Dies wird noch weiter dadurch erreicht, daß jeder Stellantrieb unmittelbar am Gehäuse befestigt ist.

Grundsätzlich ist es möglich, nur einen Stellantrieb vorzusehen; von besonderem Vorteil ist es aber, wenn zwei Stellantriebe vorgesehen sind. Hierbei kann es einerseits besonders vorteilhaft sein, wenn beide Stellantriebe jeweils über ein Schubkurbelgetriebe mit der Grundplatte gekoppelt sind. Andererseits kann es aber auch zweckmäßig sein, wenn ein Stellantrieb über ein Schubkurbelgetriebe mit der Grundplatte gekoppelt ist und daß der andere Stellantrieb mit der Grundplatte über einen Zahntrieb gekoppelt ist.

Weitere Vorteile und Merkmale ergeben sich aus der nachfolgenden Beschreibung von Ausführungsbeispielen anhand der Zeichnung. Es zeigt
- Fig. 1: eine erste Ausführungsform eines Rückspiegels gemäß der Erfindung in Draufsicht mit abgenommener Spiegelglasscheibe,
- Fig. 2: einen Querschnitt durch den Rückspiegel gemäß der Schnittlinie II-II in Fig. 1,
- Fig. 3: eine zweite Ausführungsform eines erfindungsgemäßen Rückspiegels in Draufsicht bei herausgenommener Spiegelglasscheibe,
- Fig. 4: einen Querschnitt durch die zweite Ausführungsform gemäß der Schnittlinie IV-IV in Fig. 3,
- Fig. 5: eine dritte Ausführungsform eines erfindungsgemäßen Rückspiegels in Draufsicht bei herausgenommener Spiegelglasscheibe, und
- Fig. 6: einen Querschnitt durch die dritte Ausführungsform gemäß der Schnittlinie VI-VI in Fig. 5.

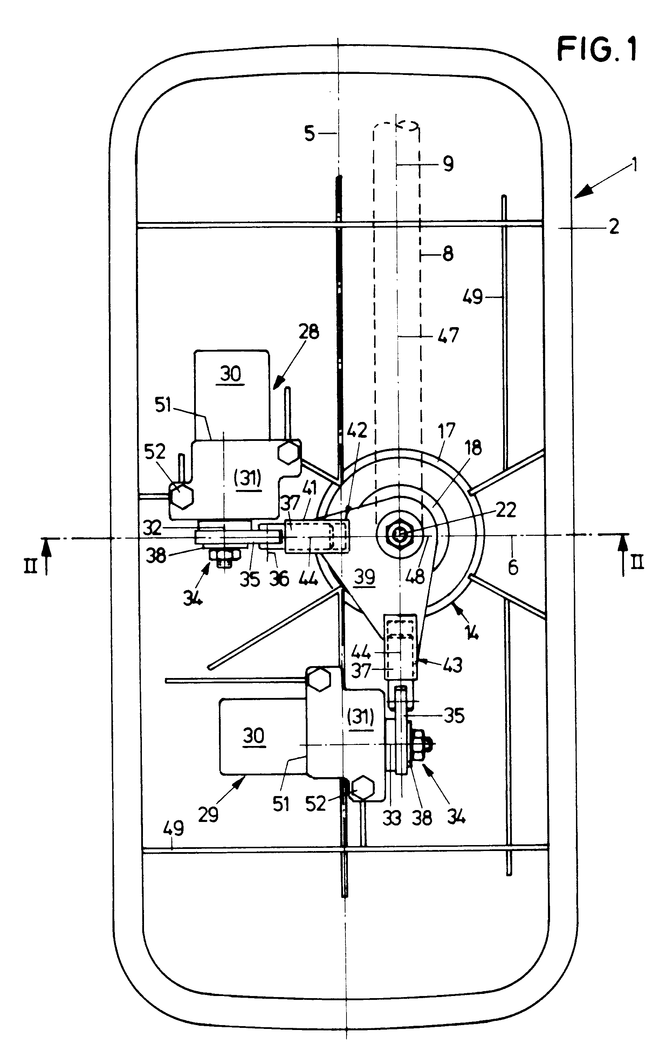

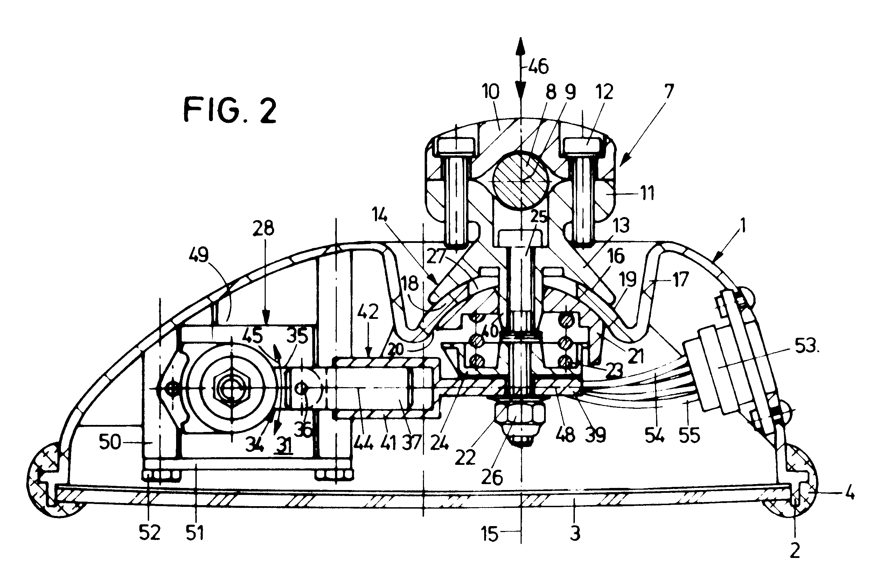

Der in den Fig. 1 und 2 dargestellte Rückspiegel für Lastkraftwagen weist ein Gehäuse 1 mit einer Glasaufnahme 2 auf, in der eine gewölbte Spiegelglasscheibe 3 mittels eines Halterings 4 auswechselbar gehalten ist. Die rahmenartige Glasaufnahme 2 begrenzt die größte - bei herausgenommener Spiegelglasscheibe 3 nach außen offene - Querschnittsfläche des Gehäuses 1. Die Glasaufnahme 2 ist - entsprechend der Querschnittsfläche der Spiegelglasscheibe 3 - etwa rechteckig ausgebildet. Die durch sie begrenzte Fläche weist zwei senkrecht zueinander verlaufende Symmetrieachsen 5,6 auf, wobei die eine Symmetrieachse 5 deutlich länger als die Symmetrieachse 6 ist. In der Praxis ist die Symmetrieachse 5 etwa doppelt so lang wie die Symmetrieachse 6.

Der Rückspiegel weist eine Befestigungseinrichtung 7 nach Art einer Stativklemme auf, mittels derer eine klemmende Befestigung an einer Stange 8 eines Befestigungsbügels möglich ist. Ein solcher L- oder C-förmiger Befestigungsbügel wird seitlich am Fahrerhaus eines LKW angebracht, wie dies in der Praxis allgemein üblich ist. Die Stange 8 wird hierbei im wesentlichen senkrecht angeordnet. Ihre Achse 9 verläuft im wesentlichen parallel zur langen Symmetrieachse 5. Die Befestigungseinrichtung 7 weist zwei an der Stange 8 anliegende Klemmbacken 10, 11 auf, die mittels Schrauben 12 zusammengehalten werden und die Stange 8 klemmend zwischen sich aufnehmen. Bei gelösten Schrauben 12 kann der Rückspiegel in Richtung der Achse 9 auf der Stange 8 verschoben und um die Stange 8 verschwenkt werden. Die eine Klemmbacke 11 ist einteilig mit einem Lagerkörper 13 eines nach Art eines sphärischen Lagers ausgebildeten Universal-Gelenks 14 ausgebildet. An diesem Lagerkörper 13 ist symmetrisch zu seiner Mittelachse 15 eine konkave sphärische Lagerschale 16 ausgebildet.

Um den Lagerkörper 13 ist das Gehäuse 1 mit einer Vertiefung versehen, d.h. es weist einen in das Innere des Gehäuses 1 gerichteten etwa kegelstumpfförmigen Wandbereich 17 auf, an dessen Boden ein Lagerteil 18 mit zwei zueinander parallelen Lagerflächen 19,20 ausgebildet ist. Die äußere Lagerfläche 19 dieser beiden Lagerflächen 19,20 liegt gegen die Lagerschale 16 an. Gegen die innere Lagerfläche 20 liegt wiederum ein shärischer Lagerdeckel 21 an. Die Lagerflächen 19,20 und die Lagerschale 16 und der Lagerdeckel 21 haben einen gemeinsamen Kugel-Mittelpunkt 22, der auf der Mittelachse 15 liegt. Der Lagerdeckel 21 wird mittels einer vorgespannten Schrauben-Druckfeder 23 gegen das Lagerteil 18 und damit gegen die Lagerschale 16 gedrückt, so daß das Lagerteil 18 mit seinen Lagerflächen 19,20 zwischen der Lagerschale 16 und dem Lagerdeckel 21 mit einer vorgegebenen Reibungskraft gehalten ist. Die Druckfeder 23 stützt sich auf ihrer dem Lagerdeckel 21 entgegengesetzten Seite gegen ein deckelartiges Widerlager 24 ab. Das aus Lagerkörper 13 mit Lagerschale 16, Lagerteil 18, Lagerdeckel 21, Druckfeder 23 und Widerlager 24 bestehende Paket wird durch einen mit der Mittelachse 15 fluchtenden Gewindebolzen 25 mit einer aufgeschraubten Gewindemutter 26 zusammengehalten. Durch das Aufschrauben der Gewindemutter 26 wird die Vorspannung der Druckfeder 23 und damit die Reibungskraft eingestellt, mit der das Lagerteil 18 und damit das Gehäuse 1 in dem Universal-Gelenk 14 gehalten wird. Wenn diese Reibungskraft überschritten wird, dann verschwenkt das Gehäuse 1 mit dem Spiegelglas 3 relativ zur Befestigungseinrichtung 2 um den Mittelpunkt 22. Diese Sicherheitszwecken dienende Verschwenkbarkeit wird ermöglicht und begrenzt durch eine mittlere Öffnung 27 in dem Lagerteil 18. In dieser bis jetzt beschriebenen Ausführung kann der Rückspiegel manuell eingestellt werden; er ist also voll funktionsfähig.

Am Gehäuse 1 sind zwei elektromotorische Stellantriebe 28, 29 angebracht, die jeweils aus einem Elektromotor 30 und einem diesem nachgeordneten Untersetzungsgetriebe 31 bestehen. Die Abtriebsachsen 32,33 dieser beiden Stellantriebe 28,29 sind senkrecht zueinander angeordnet, wobei jeweils eine Abtriebsachse 32 bzw. 33 zu einer der Symmetrieachsen 5 bzw. 6 parallel verläuft. An der jeweiligen Abtriebsachse 32,33 jedes Stellantriebs 28,29 ist ein Schubkurbelgetriebe 34 angebracht, das aus einer von der jeweiligen Abtriebsachse 32 bzw. 33 angetriebenen Kurbel 35 und einer mit dieser über ein Kurbelgelenk 36 verbundenen Schubstange 37 besteht. Das jeweilige Schubkurbelgetriebe 34, d.h. konkret die Kurbel 35, ist mit der jeweiligen Abtriebsachse 32 bzw. 33 über eine in der Zeichnung nur angedeutete Rutschkupplung 38 verbunden. An dem Universal-Gelenk 14 der Befestigungseinrichtung 7 ist eine nach Art eines Winkelhebels ausgestaltete Grundplatte 39 befestigt, die sich mittels des Gewindebolzens 25 mit Gewindemutter 26 über eine Distanzhülse 40 gegenüber dem Lagerkörper 13 abstützt. Gegen diese Distanzhülse 40 stützt sich auch das deckelartige Widerlager 24 ab. Die Grundplatte 39 ist damit fest mit der Befestigungseinrichtung 7 verbunden.

Die Grundplatte 39 weist zwei zylindrische Lagerhülsen 41 auf, in die die ebenfalls zylindrisch ausgebildeten Schubstangen 37 der Schubkurbelgetriebe 34 der beiden Stellantriebe 28,29 eingreifen. Hierdurch werden Schiebelager 42,43 gebildet. In diesen Schiebelagern 42,43 können in Richtung der jeweiligen Achse 44 der entsprechenden Schubstange 37 wirkende Kräfte nicht übertragen werden, während senkrecht hierzu wirkende Kräfte vom Schubkurbelgetriebe 34 auf die Grundplatte 39 übertragen werden können. Bei Verschwenkbewegungen des jeweiligen Kurbelgelenks 36 etwa senkrecht zur jeweiligen Achse 44, d.h. etwa parallel zur Mittelachse 15, entsprechend den Schwenkrichtungspfeilen 45,46, wird das Gehäuse 1 relativ zur Befestigungseinrichtung 7 verschwenkt. Hierbei wird das Lagerteil 18 mit seinen beiden Lagerflächen 19,20 unter Überwindung der oben geschilderten Reibungskraft zwischen der Lagerschale 16 und dem Lagerdeckel 21 verschoben. Die Verschwenkbewegungen des Gehäuses 1 erfolgen um zwei durch den Kugel-Mittelpunkt 22 gehende, senkrecht zueinander liegende Schwenkachsen 47,48, und zwar um die Schwenkachse 47 bei Betätigung des Stellantriebs 28 und um die Schwenkachse 48 bei Betätigung des Stellantriebs 29. Die Schwenkachse 47 verläuft parallel zur Abtriebsachse 32; die Schwenkachse 48 verläuft parallel zur Abtriebsachse 33.

Da die jeweilige Schubstange 37 und die zugehörige Lagerhülse 41 zylindrisch ausgebildet sind, wird erreicht, daß die Ausrichtung des jeweiligen Stellantriebs 28 bzw. 29 zur Grundplatte 39 nicht sehr exakt zu sein braucht, da Ausrichtfehler durch die Drehbarkeit der jeweiligen Schubstange 37 um ihre Achse 44 relativ zur Lagerhülse 41 und damit relativ zur Grundplatte 39 ausgeglichen werden.

Zur Befestigung der Stellantriebe 28,29 sind im Gehäuse 1 durch Rippen 49 gebildete Auflagen vorgesehen. Beiderseits der jeweiligen Untersetzungsgetriebe 31 sind Hülsen 50 im Gehäuse 1 ausgebildet, auf denen eine auf dem Untersetzungsgetriebe 31 aufliegende Halteplatte 51 mittels Schrauben 52 gehalten werden, so daß die Stellantriebe 28,29 in einfacher Weise klemmend gehalten werden. Bei dieser Montage können letztere auch ausgerichtet werden. Da das Gehäuse 1 mit den Rippen 49 und den Hülsen 50 aus Kunststoff besteht, ist eine formgenaue Herstellung problemlos und in üblicher Weise möglich. Da der Lagerkörper 13 einerseits und der Lagerdeckel 21 andererseits üblicherweise aus Metall bestehen, und andererseits - wie soeben dargestellt - auch das Lagerteil 18 aus Kunststoff besteht, lassen sich im Universal-Gelenk 14 sehr genau definierbare Reibungs- und Gleitverhältnisse einstellen.

Im Gehäuse 1 ist eine Steckdose 53 angebracht, von der elektrische Leitungen 54,55 zu den Elektromotoren 30 der beiden Stellantriebe 28,29 führen. Die Betätigungsschalter für die Stellantriebe 28,29 befinden sich im Kraftfahrzeug und sind daher nicht dargestellt.

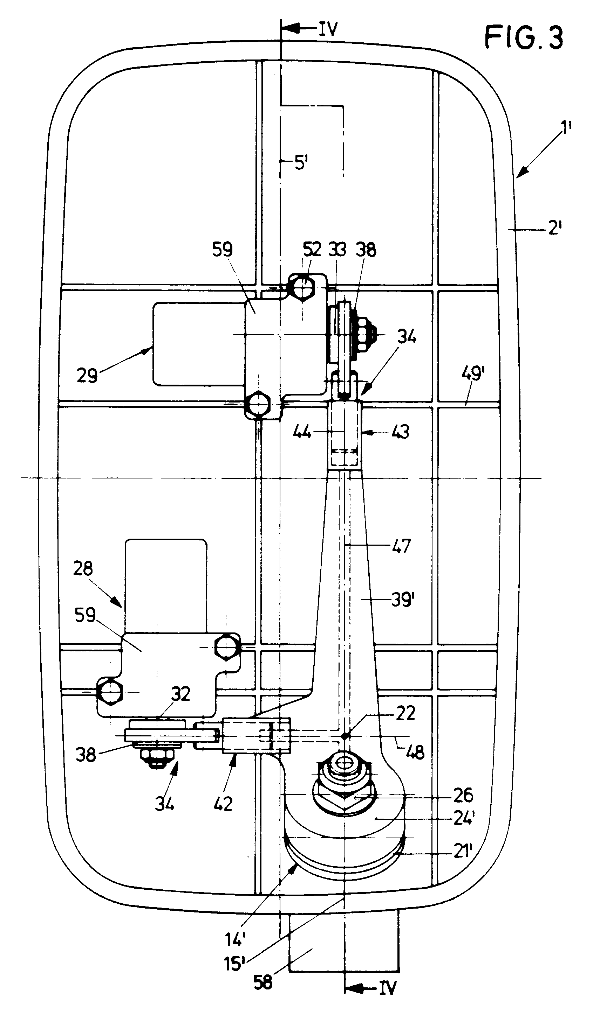

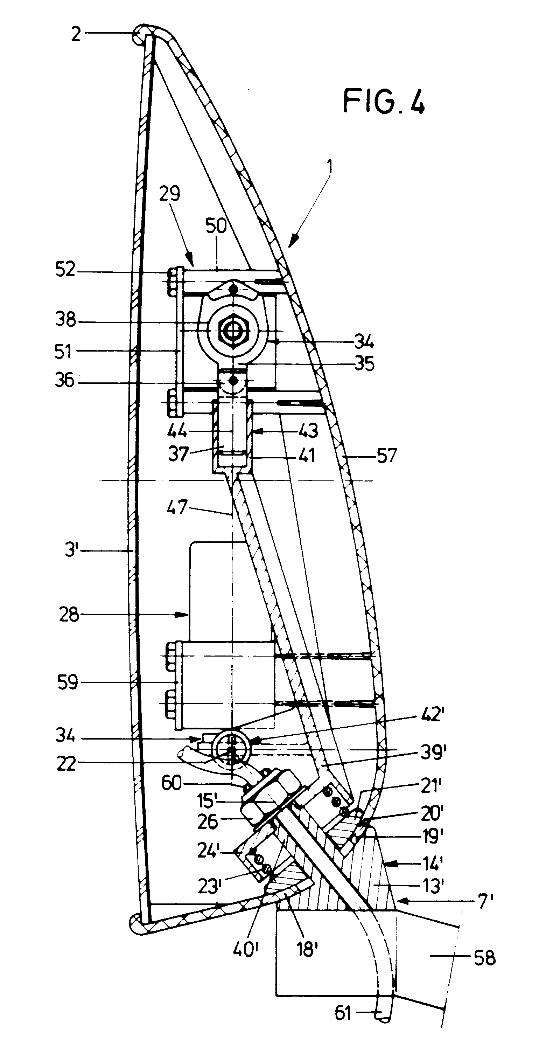

Die Ausführungsform nach den Fig. 3 und 4 unterscheidet sich von der nach den Fig. 1 und 2 im wesentlichen durch die Anordnung einer Befestigungseinrichtung 7′ und damit des Universal-Gelenks 14′ relativ zum Gehäuse 1′. Da alle wesentlichen Teile identisch oder zumindest funktionell gleich den entsprechenden Teilen der Ausführungsform nach den Fig. 1 und 2 ist, werden für identische Teile dieselben Bezugsziffern und für konstruktiv geänderte aber funktionell gleiche Teile dieselben Bezugsziffern mit einem hochgesetzten Strich verwendet, ohne daß es im einzelnen jeweils einer neuen Beschreibung bedarf.

Bei dieser Ausführungsform weist das Gehäuse 1′ eine relativ zur Spiegelglasscheibe 3′ der Glasaufnahme 2′ steil gewölbte untere Außenquerwand 56 und eine sich von dieser nach oben erstreckende entsprechend flach gewölbte Außenquerwand 57 auf. Am im unteren Bereich liegenden Übergang zwischen diesen beiden Wänden 56,57 ist der sphärische Lagerteil 18′ mit den beiden Lagerflächen 19′ und 20′ unmittelbar in diesem Wandbereich ausgebildet. Die Befestigungseinrichtung 7′ kann einen unmittelbar zum Lastkraftwagen führenden Haltearm 58 aufweisen. Benachbart zum Universal-Gelenk 14′ ist ein Stellantrieb 28 angeordnet, während der andere Stellantrieb 29 im oberen Bereich des Gehäuses 1′ angeordnet ist. Dementsprechend ist die Ausgestaltung der winkelhebelartigen Grundplatte 39′ derart, daß das dem Stellantrieb 28 zugeordnete Schiebelager 42 relativ nahe an der Mittelachse 15′ angeordnet ist, während das dem Stellantrieb 29 zugeordnete Schiebelager 43 einen deutlich größeren Abstand hierzu hat.

Die Befestigungseinrichtung 7′ weist keinen Gewindebolzen auf; vielmehr ist an der Distanzhülse 40′ ein das deckelartige Widerlager 24′ durchsetzender Gewinde-Hülsen-Ansatz 60 ausgebildet, auf den die Gewindemutter 26 aufgeschraubt ist. Dies ermöglicht es, durch die Distanzhülse 40′ ein Stromversorgungskabel 61 für die Stellantriebe 28,29 in das Gehäuse 1′ einzuführen.

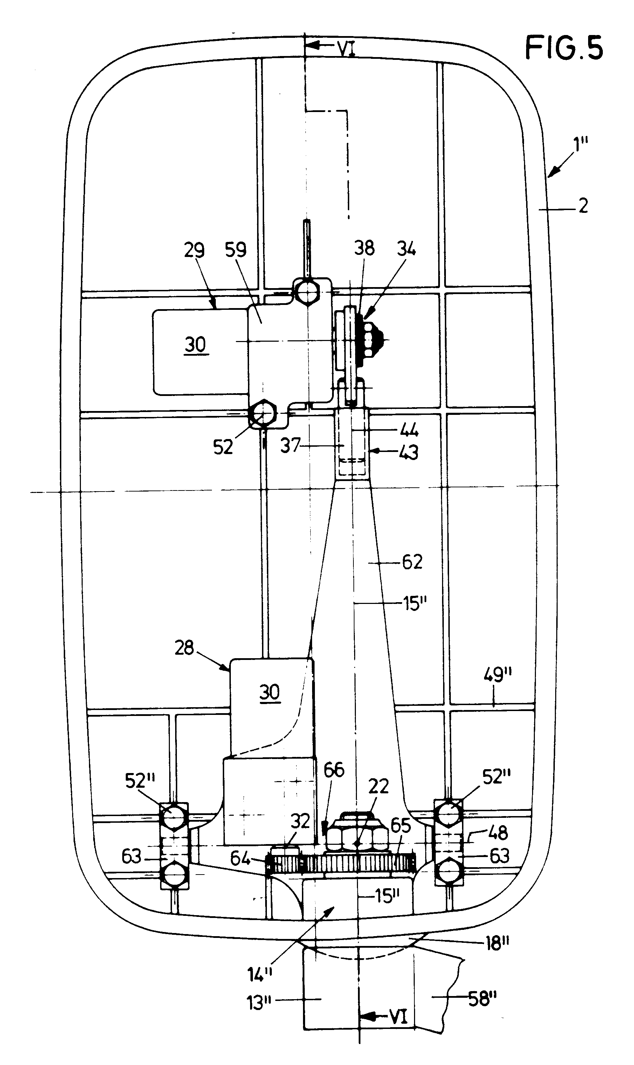

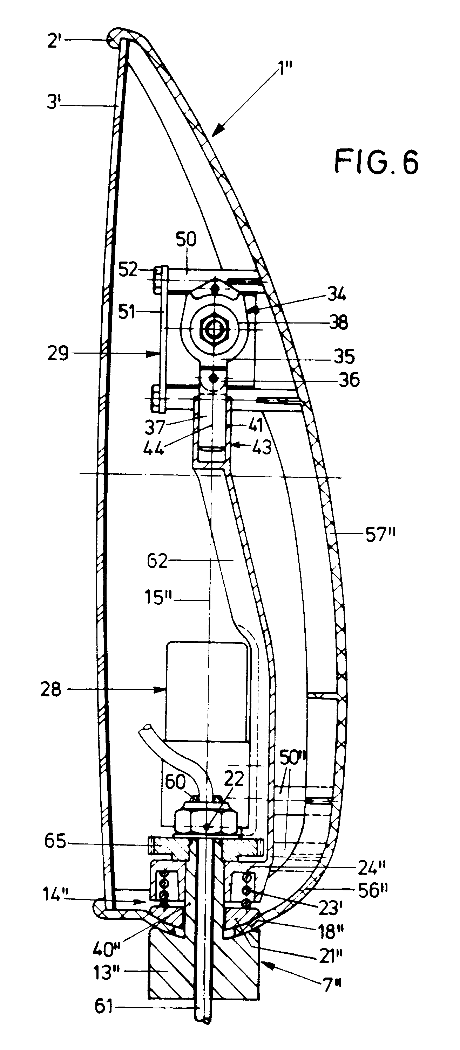

Auch für die Ausführungsformen nach den Fig. 5 und 6 gilt, daß mit den zuvor beschriebenen Ausführungsformen identische Teile mit denselben Bezugszeichen und konstruktiv andere aber funktionell gleiche Teile mit derselben Bezugsziffer mit einem hochgesetzten Doppelstrich bezeichnet werden. Die untere Außenquerwand 56" weist in diesem Fall den sphärischen Lagerteil 18" auf. Am Universal-Gelenk 14" ist in diesem Fall eine Grundplatte 62 nach Art eines einfachen Hebels fest angebracht, an der ein Stellantrieb 29 mittels eines Schubkurbelgetriebes 34 über ein Schiebelager 43 angreift. Die Grundplatte 62 ist um die Mittelachse 15" drehbar, die insoweit also als Schwenkachse 15" dient. Am Gehäuse 1" ist ein Stellantrieb 28 mittels einer Halteplatte 63 und Schrauben 52" befestigt, an dessen Abtriebsachse 32 ein Zahnritzel 64 befestigt ist, das in ein drehfest mit der Distanzhülse 40" und darüber mit dem Lagerkörper 13" verbundenes Zahnrad 65 eingreift. Das Zahnritzel 64 und das Zahnrad 65 bilden einen Zahntrieb 66. Durch einen entsprechenden Antrieb des Stellantriebs 28 um seine zur Mittelachse 15" parallele Abtriebsachse 32 wird das Gehäuse 1" um diese Mittelachse 15" relativ zum Haltearm 58" gedreht. Die Schwenkbewegung senkrecht hierzu, also um eine in den Fig. 5 und 6 horizontale Schwenkachse erfolgt mittels des Stellantriebs 29.

## Patentansprüche

1. Motorisch verstellbarer Rückspiegel für Kraftfahrzeuge, insbesondere Lastkraftwagen, mit einem eine Spiegelglasscheibe (3,3') aufnehmenden und haltenden Gehäuse (1,1'1"), mit einer fest mit einem Kraftfahrzeug verbindbaren Befestigungseinrichtung (7,7',7"), mit einer relativ zur Befestigungseinrichtung (7,7',7") ortsfesten Grundplatte (39,39',62) und mit einer zwischen der Grundplatte (39,39',62) und dem Gehäuse (1,1',1") angeordneten Stellmotoranordnung, die mindestens einen Stellantrieb (28,29) mit Stellgliedern aufweist, mittels derer das Gehäuse (1,1',1") um mindestens eine Schwenkachse (47,48) schwenk-verstellbar ist, wobei mindestens ein Stellantrieb (28,29) relativ zum Gehäuse (1,1',1") ortsfest angeordnet und über ein Schubkurbelgetriebe (34) mit der Grundplatte (39,39',62) gekoppelt ist, und wobei das Schubkurbelgetriebe (34) eine Kurbel (35) aufweist, die mit der Grundplatte (39,39',62) über ein Schiebelager (42,43) gekoppelt ist, dadurch gekennzeichnet, daß an der Kurbel (35) eine Schubstange (37) mittels eines Kurbelgelenks (36) angelenkt ist, die in einer mit der Grundplatte (39,39') verbundenen Lagerhülse (41) verschiebbar geführt ist.

2. Rückspiegel nach Anspruch 1, dadurch gekennzeichnet, daß das Schubkurbelgetriebe (34) in sich um eine Längsachse (44) des Schiebelagers (42,43) schwenkbar ist.

3. Rückspiegel nach Anspruch 1, dadurch gekennzeichnet, daß das Gehäuse (1,1',1") um ein mit der Befestigungseinrichtung (7,7',7") verbundenes Universal-Gelenk (14,14',14") um einen Mittelpunkt (22) schwenkbar ist.

4. Rückspiegel nach Anspruch 3, dadurch gekennzeichnet, daß die jedem Stellantrieb (28,29) zugeordnete Schwenkachse (47,48) durch den Mittelpunkt (22) des Universal-Gelenks (14,14',14") verläuft.

5. Rückspiegel nach Anspruch 1, dadurch gekennzeichnet, daß jeder Stellantrieb (28,29) unmittelbar am Gehäuse (1,1',1") befestigt ist.

6. Rückspiegel nach Anspruch 1, dadurch gekennzeichnet, daß zwei Stellantriebe (28,29) vorgesehen sind.

7. Rückspiegel nach Anspruch 6, dadurch gekennzeichnet, daß beide Stellantriebe jeweils über ein Schubkurbelgetriebe (34,67,75) mit der Grundplatte (39,39',62) gekoppelt sind.

8. Rückspiegel nach Anspruch 6, dadurch gekennzeichnet, daß ein Stellantrieb (29) über ein Schubkurbelgetriebe (34) mit der Grundplatte (62) gekoppelt ist und daß der andere Stellantrieb (28) mit der Grundplatte (62) über einen Zähntrieb (66) gekoppelt ist.

9. Rückspiegel nach Anspruch 3, dadurch gekennzeichnet, daß am Gehäuse (1,1',1") ein schalenartiges Lagerteil (18,18',18") ausgebildet ist, das mit einer sphärischen Lagerfläche (19,19',19") gegen eine Lagerschale (16,16',16") des Universal-Gelenks (14,14',14") gedrückt ist.

10. Rückspiegel nach Anspruch 9, dadurch gekennzeichnet, daß das Lagerteil (18,18',18") mittels einer vorgespannten Druckfeder (23,23',23") elastisch gegen die Lagerschale (16,16',16") gedrückt ist.

11. Rückspiegel nach Anspruch 9, dadurch gekennzeichnet, daß das Lagerteil (18,18',18") mit zwei sphärischen Lagerflächen (19,19',19",20,20',20") zwischen der Lagerschale (16,16',16") und einem sphärischen Lagerdeckel (21,21',21") angeordnet ist.

## Claims

1. A motor-powered adjustable rear view mirror for motor vehicles, particularly lorries, comprising a housing (1,1',1") accommodating and supporting a mirror glass (3,3') and comprising a fixing device (7,7',7") adapted to be rigidly connected to a motor vehicle and having a base plate which is stationary in relation to the fixing device (7,7',7") and with, disposed between the base plate (39,39'62) and the housing (1,1',1"), a servo-motor arrangement comprising at least one positioning drive (28,29) with positioning elements by means of which the housing (1,1',1") can be adjusted/pivoted about at least one pivot axis (47,48), whereby at least one positioning drive (28,29) is stationary in relation to the housing (1,1',1") and is coupled to the base plate (39,39',62) via a slider-crank mechanism (34), and whereby the latter comprises a crank (35) coupled to the base plate (39,39',62) via a sliding mounting (42,43), characterised in that there is articulated on the crank (35) by means of a crank joint (36) a push rod (37) which is displaceably guided in a bearing sleeve (41) which is connected to the base plate (39,39').

2. A rear view mirror according to Claim 1, characterised in that the slider-crank mechanism (34) is in itself pivotable about a longitudinal axis (44) of the sliding bearing (42,43).

3. A rear view mirror according to Claim 1, characterised in that the housing (1,1',1") is pivotable about a central point (22) about a universal joint (14,14',14") which is connected to the fixing device (7,7',7").

4. A rear view mirror according to Claim 3, characterised in that the pivoting axis (47,48) associated with each positioning drive (28,29) passes through the central point (22) of the universal joint (14,14'14").

5. A rear view mirror according to Claim 1, characterised in that each positioning drive (28,29) is mounted directly on the housing (1,1',1").

6. A rear view mirror according to Claim 1, characterised in that two positioning drives (28,29) are provided.

7. A rear view mirror according to Claim 6, characterised in that both positioning drives are in each case connected to the base plate (39,39',62) via a slider-crank mechanism (34,67,75).

8. A rear view mirror according to Claim 6, characterised in that the positioning drive (29) is coupled to the base plate (62) via a slider-crank mechanism (34) and in that the other positioning drive (28) is coupled to the base plate (62) via a geared transmission (66).

9. A rear view mirror according to Claim 3, characterised in that constructed on the housing (1,1',1") is a shell-like bearing member (18,18',18") which has a spherical bearing surface (19,19',19") by which it is pressed against a bearing shell (16,16',16") of the universal joint (14,14',14").

10. A rear view mirror according to Claim 9, characterised in that the bearing member (18,18',18") is pressed by an initially tensioned thrust spring (23,23',23") resiliently against the bearing shell (16,16',16").

11. A rear view mirror according to Claim 9, characterised in that the bearing member (18,18',18") with two spherical bearing surfaces (19,19',19",20,20',20") is disposed between the bearing shell (16,16',16") and a spherical bearing cover (21,21',21").

## Revendications

1. Rétroviseur à réglage motorisé pour véhicules à moteur, en particulier pour camions, avec un boitier (1, 1', 1") recevant et maintenant une plaque de verre formant miroir (3, 3'), avec un dispositif de fixation (7, 7', 7") pouvant être relié de manière fixe à un véhicule à moteur, avec une plaque de base (39, 39', 62) stationnaire par rapport au dispositif de fixation (7, 7', 7") et avec un montage à moteur de réglage disposé entre la plaque de base (39, 39', 62) et le boitier (1, 1', 1"), qui présente au moins un entraînement de réglage (28, 29) avec des organes de réglage, au moyen desquels le boîtier (1, 1', 1") peut être positionné en pivotant autour d'au moins un axe de pivotement (47, 48), au moins un entraînement de réglage (28, 29) étant monté de manière stationnaire par rapport au boîtier (1, 1', 1") et couplé avec la plaque de base (39, 39', 62), par un mécanisme à manivelle de poussée (34), et le mécanisme à manivelle de poussée (34) présentant une manivelle (35), qui est couplée avec la plaque de base (39, 39', 62), par un palier coulissant (42, 43), caractérisé en ce qu'une tige de poussée (37) est articulée sur la manivelle (35) au moyen d'une articulation de manivelle (36), qui est guidée en coulissant dans une gaine de palier (41) reliée à la plaque de base (39, 39').

2. Rétroviseur selon la revendication 1, caractérisé en ce que le mécanisme à manivelle de poussée (34), peut lui-même pivoter autour d'un axe longitudinal (44) du palier coulissant (42, 43).

3. Rétroviseur selon la revendication 1, caractérisé en ce que le boitier (1, 1', 1") peut pivoter autour d'un joint à rotule (14, 14', 14") relié au dispositif de fixation, autour d'un point central (22).

4. Rétroviseur selon la revendication 3, caractérisé en ce que l'axe de pivotement (47, 48) de chaque entraînement de réglage (28, 29) passe par le point central (22) du joint à rotule (14, 14', 14").

5. Rétroviseur selon la revendication 1, caractérisé en ce que chaque entraînement de réglage (28, 29) est fixé directement sur le boitier (1, 1', 1").

6. Rétroviseur selon la revendication 1, caractérisé en ce que deux entraînements de réglage (28, 29) sont prévus.

7. Rétroviseur selon la revendication 6, caractérisé en ce que les deux entraînements de réglage (28, 29) sont chacun couplés, par un mécanisme à manivelle de poussée (34, 67, 75), à la plaque de base (39, 39', 62).

8. Rétroviseur selon la revendication 6, caractérisé en ce qu'un entraînement de réglage (29) est couplé, par un mécanisme à manivelle de poussée (34), à la plaque de base (62), et en ce que l'autre entraînement de réglage (28) est couplé à la plaque de base (62) par un mécanisme denté (66).

9. Rétroviseur selon la revendication 3, caractérisé en ce qu'est formée sur le boitier (1, 1', 1") une pièce de support (18, 18', 18") semblable à une cuvette, qui est pressée avec une surface de support (19, 19', 19"), sphérique, contre une cuvette de support (16, 16', 16") du joint à rotule (14, 14', 14").

10. Rétroviseur selon la revendication 9, caractérisé en ce que la pièce de support (18, 18', 18") est pressée de manière élastique au moyen d'un ressort à pression (23, 23', 23") précontraint contre la cuvette de support (16, 16', 16").

11. Rétroviseur selon la revendication 9, caractérisé en ce que la pièce de support (18, 18', 18") avec deux surfaces de support (19, 19', 19", 20, 20', 20"), sphériques, est disposée entre la cuvette de support (16, 16', 16") et un couvercle de support (21, 21', 21"), sphérique.
